# EUROPÄISCHE PATENTANMELDUNG

(11) **EP 4 030 267 A1**
(43) Veröffentlichungstag der Anmeldung: **20.07.2022**
(21) Anmeldenummer: 21151889.9
(22) Anmeldetag: 15.01.2021
(51) Int. Cl.: G06F 3/01, G06T 19/00, H04N 17/00, G06T 7/521, G01S 7/497, G06Q 10/06

(54) **COMPUTERASSISTIERTES VERFAHREN ZUR AUFNAHME VON 3D-TIEFENDATEN, MOBILES DATENVERARBEITUNGSGERÄT, UND COMPUTERPROGRAMMPRODUKT**

(71) Anmelder: Synthetic Dimension GmbH, 5020 Salzburg (AT)
(72) Erfinder: Gadermayr, Dr. Michael, 5411 Oberalm (AT)
(74) Vertreter: Stolmár & Partner Patentanwälte PartG mbB

(57) **Zusammenfassung**

Es wird ein computerassistiertes Verfahren zur Aufnahme von 3D-Tiefendaten einer Szene vorgestellt, bei welchem ein mobiler Sensor zur Aufnahme von 3D-Tiefendaten durch die Szene bewegt wird und 3D-Tiefendaten der Szene mittels des mobilen Sensors aufgenommen werden. Das Verfahren zeichnet sich dadurch aus, dass während der Bewegung des mobilen Sensors durch die Szene wiederholt aus den aufgenommenen 3D-Tiefendaten ein Vorhersagewert für die erwartete Qualität eines aus den aufgenommenen 3D-Tiefendaten zu ermittelnden 3D-Modells der Szene ermittelt und einem Nutzer zur Verfügung gestellt wird um die Rekonstruktionsqualität positiv zu beeinflussen.

Weiterhin werden ein Datenverarbeitungsgerät und ein Computerprogrammprodukt zur Durchführung des Verfahrens beschrieben.

## Beschreibung

Die Erfindung umfasst ein computerassistiertes Verfahren zur Aufnahme von 3D-Tiefendaten einer Szene, bei welchem ein mobiler Sensor zur Aufnahme von 3D-Tiefendaten durch die Szene bewegt wird und 3D-Tiefendaten der Szene mittels des mobilen Sensors aufgenommen werden. Weiterhin umfasst die Erfindung ein mobiles Datenverarbeitungsgerät sowie ein Computerprogrammprodukt zur Durchführung eines solchen Verfahrens.

Die computergestützte Vermessung von Szenen hat in der letzten Zeit zunehmend an Bedeutung gewonnen. Weiterentwicklungen im Bereich der Sensortechnologie bieten dabei die Möglichkeit, mit tragbaren Sensoren 3D-Tiefendaten einer interessierenden Szene aufzunehmen, um daraus ein 3D-Modell zu erstellen. Ein so erstelltes 3D-Modell kann beispielsweise in VR- (virtual reality) oder AR- (augmented reality) verwendet werden, um die Szene mittels eines Computers und eines geeigneten Anzeigegeräts zu visualisieren. Als interessierende Szenen können hier einzelne Räume oder komplette Immobilien, mit oder ohne Einrichtung, aber auch kulturelle Stätten wie Kulturdenkmäler in Betracht kommen.

Für die Berechnung von 3D-Modellen von interessierenden Szenen stehen verschiedene computergestützte Methoden zur Verfügung, welche oftmals lernbasierte KI-Verfahren anwenden. Solche Verfahren sind beispielsweise in der Patentanmeldung EP20190957.9 der Anmelderin beschrieben. Neben lernbasierten KI-Verfahren stehen auch klassisch deterministische Methoden zur Berechnung von 3D-Modellen zur Verfügung.

Die Qualität eines aus 3D-Tiefendaten ermittelten 3D-Modells einer Szene hängt dabei einerseits von der Leistungsfähigkeit der verwendeten Methode und andererseits von der Qualität der zur Verfügung stehenden Daten ab. Während verfügbare Berechnungsmethoden durch laufende Forschungen ständig weiterentwickelt werden, ist die Datenqualität ein schwer zu kontrollierender Faktor, der zu einem wesentlichen Anteil von der Sorgfalt einer die Datenaufnahme durchführenden oder steuernden Person abhängt. Hier kann außerdem nach der Art der Daten unterschieden werden. 3D Modelle können basierend auf echten Tiefendaten einer Szene (welche z.B. mittels LiDAR Sensoren generiert wurden) ebenso wie aus RGB Video- oder Bilddatenmaterial berechnet werden. Echte Tiefeninformationen erlauben dabei eine besonders hohe Rekonstruktionsgenauigkeit.

Es kann dabei vorkommen, dass für bestimmte Bereiche einer Szene nur wenige Tiefendaten aufgenommen werden, wenn der mobile Sensor zu schnell durch die Szene bewegt wird. Ebenso kann es vorkommen, dass der mobile Sensor nicht in ausreichend unterschiedliche Positionen und/oder Blickrichtungen bewegt wird, um beispielsweise verdeckte Abschnitte der Szene zu erfassen. Werden solche Datenmängel zu spät erkannt, kann eine neue oder ergänzende Datenaufnahme notwendig sein, um ein optimales 3D-Modell zu erstellen. Dies führt zu zusätzlichem Zeitaufwand und Kosten sowie Unzufriedenheit bzw. Frustration auf Kundenseite.

Es besteht daher eine Aufgabe der Erfindung darin, ein computerassistiertes Verfahren zur Aufnahme von 3D-Tiefendaten einer Szene, sowie hierzu geeigneter Datenverarbeitungsgeräte und Computerprogrammprodukte, bereitzustellen, welche hinsichtlich der beschriebenen Problematik verbessert sind.

Dies Aufgabe wird gemäß eines ersten Aspekts der Erfindung gelöst durch ein computerassistiertes Verfahren zur Aufnahme von 3D-Tiefendaten einer Szene, bei welchem ein mobiler Sensor zur Aufnahme von 3D-Tiefendaten durch die Szene bewegt wird und 3D-Tiefendaten der Szene mittels des mobilen Sensors aufgenommen werden, welches dadurch weitergebildet ist, dass während der Bewegung des mobilen Sensors durch die Szene wiederholt aus den aufgenommenen 3D-Tiefendaten ein Vorhersagewert für die erwartete Qualität eines aus den aufgenommenen 3D-Tiefendaten zu ermittelnden 3D-Modells der Szene ermittelt und einem Nutzer zur Verfügung gestellt wird.

Unter einem computerassistierten Verfahren wird im Rahmen der vorliegenden Beschreibung insbesondere ein Verfahren verstanden, in welchem einer das Verfahren durchführenden oder steuernden Person durch die Arbeit eines Computers Informationen zur Verfügung gestellt werden, welche die Durchführung des Verfahrens wesentlich vereinfachen oder verbessern. Dabei soll die Formulierung "computerassistiert" keinesfalls ausschließen, dass das fragliche Verfahren vollständig computergestützt oder auf sonstige Art automatisiert abläuft.

Durch die erfindungsgemäße Ausgestaltung des Verfahrens erhält der Nutzer während der Aufnahme der 3D-Tiefendaten interaktiv eine Rückmeldung über die Qualität der aufgenommenen Daten und kann so unmittelbar reagieren, wenn die Datenqualität für die Erstellung eines qualitativ hochwertigen 3D-Modells der interessierenden Szene nicht vollständig ausreichend ist. Der hierdurch entstehende Aufwand ist um ein Vielfaches kleiner als der Aufwand, welcher im Stand der Technik durch eine neue oder ergänzende Datenaufnahme entsteht, wenn ein Mangel der Daten erst nachträglich festgestellt wird. Die Bereitstellung des Vorhersagewerts kann den Benutzer sogar intuitiv dazu animieren, qualitativ besonders hochwertige Daten aufzunehmen. Die Erzeugung qualitativ hochwertiger Daten in einem effizienten Prozess stehen hier speziell im Fokus.

In einer möglichen Weiterbildung eines Verfahrens nach der Erfindung kann der Vorhersagewert einen Grad der Übereinstimmung eines aus den aufgenommenen 3D-Tiefendaten zu ermittelnden 3D-Modells der Szene mit einem idealen 3D-Modell der Szene repräsentieren.

Der Vorhersagewert kann ein skalarer Wert mit einem beidseitig begrenzten Wertebereich sein, wobei ein erster Grenzwert des Wertebereichs eine perfekte Übereinstimmung anzeigen kann, und wobei ein zweiter Grenzwert des Wertebereichs eine nicht vorhandene Übereinstimmung anzeigen kann.

Ein denkbarer Wertebereich sind beispielsweise reale Zahlen zwischen "0" und "1", wobei ein Vorhersagewert von "0" ein völliges Fehlen einer Übereinstimmung anzeigt, und wobei ein Vorhersagewert von "1" eine vollständige Übereinstimmung anzeigt. Andere Wertebereiche sind ebenfalls denkbar, wie z.B. ganze Zahlen zwischen "0" und "255" oder zwischen "0" und "65535". Für die Weitergabe an den Benutzer kann es nützlich sein, den fein abgetasteten Wertebereich zu Quantisieren, beispielsweise in die Kategorien "hohe Qualität", "mittlere Qualität" und "Qualität nicht ausreichend".

In einer bevorzugten Ausführung der Erfindung kann die Ermittlung des Vorhersagewerts durch ein lernbasiertes KI-System erfolgen. Das KI-System kann dabei mit geeigneten Trainingsdaten trainiert sein, welche eine große Anzahl von Sätzen von 3D-Tiefendaten, daraus ermittelten 3D-Modellen, sowie diesen 3D-Modellen zugeordneten Qualitätskennzahlen umfassen.

In einer weiteren Ausgestaltung eines Verfahrens nach der Erfindung kann zusätzlich zu dem Vorhersagewert wenigstens eine geeignete Maßnahme ermittelt werden, um die erwartete Qualität des zu ermittelnden 3D-Modells zu verbessern, und ein Hinweis auf diese Maßnahme dem Nutzer zur Verfügung gestellt wird. Der Nutzer erhält somit zusätzlich zu der Vorhersage der Qualität auch einen Hinweis, wie diese Qualität weiter verbessert werden kann. Dazu kann das KI-System zusätzlich mit Trainingsdaten trainiert sein, welche 3D-Tiefendaten mit typischen Datenmängeln sowie eine Angabe geeigneter Gegenmaßnahmen beinhalten.

Eine mögliche geeignete Maßnahme kann eine Veränderung der Geschwindigkeit beinhalten, mit welcher der mobile Sensor durch die Szene bewegt wird. Wird der Sensor beispielsweise zu schnell bewegt, kann die Dichte der 3D-Tiefendaten zu gering sein, um ein gutes 3D-Modell zu erstellen. In diesem Fall kann dem Nutzer ein Hinweis gegeben werden, den Sensor langsamer zu bewegen.

Eine andere geeignete Maßnahme kann eine Bewegung des mobilen Sensors zu zusätzlichen Aufnahmepositionen und/oder in zusätzliche Aufnahmerichtungen beinhalten. Ist beispielsweise ein Bereich der Szene von den bereits durch den Sensor angefahrenen Aufnahmepositionen oder Aufnahmerichtungen nicht oder nicht vollständig einsehbar, so fehlen für diesen Bereich Daten. Der Nutzer kann dann einen Vorschlag erhalten, den Sensor in Aufnahmepositionen und/oder Aufnahmerichtungen zu bewegen, von denen aus der fragliche Bereich der Szene erfassbar ist.

Gemäß eines weiteren Aspekts der Erfindung wird die Aufgabe gelöst durch ein mobiles Datenverarbeitungsgerät, umfassend: wenigstens einen Sensor zur Aufnahme von 3D-Tiefendaten, eine Prozessoreinheit, eine Speichereinheit, sowie eine Benutzerschnittstelle, welches eingerichtet ist, ein Verfahren nach der vorangehenden Beschreibung auszuführen. Bezüglich der hierdurch erreichbaren Vorteile und Wirkungen wird auf das oben gesagte verwiesen.

Das Datenverarbeitungsgerät kann dabei Positions-, Trägheits-, und/oder Lagesensoren umfassen. Die Daten solcher Sensoren können die Aufnahme von 3D-Tiefendaten unterstützen. Das Datenverarbeitungsgerät kann ein Mobiltelefon oder ein Tablet sein.

Gemäß eines dritten Aspekts der Erfindung wird die Aufgabe gelöst durch ein Computerprogrammprodukt mit Programminstruktionen die geeignet sind, bei Ausführung durch eine Prozessoreinheit eines mobilen Datenverarbeitungsgeräts gemäß den obigen Ausführungen dieses zu veranlassen, ein Verfahren nach den obigen Ausführungen durchzuführen. Bezüglich der hierdurch erreichbaren Vorteile und Wirkungen wird auf das oben gesagte verwiesen.

In einer Weiterbildung des Computerprogrammprodukts der Erfindung kann dieses zusätzlich zu den Programminstruktionen durch Trainingsverfahren ermittelte Funktionsparameter des KI-Systems umfassen.

Die Erfindung wird nachfolgend anhand einiger beispielhafter Ausführungsbeispiele näher erläutert. Dabei sollen die Ausführungsbeispiele lediglich zum besseren Verständnis der Erfindung beitragen, ohne diese einzuschränken.

Es zeigen:
Fig. 1: Ein mobiles Datenverarbeitungsgerät,
Fig. 2: Ein Ablaufdiagramm eines Verfahrens zur Datenaufnahme nach dem Stand der Technik,
Fig. 3: Ein Ablaufdiagramm eines Verfahrens zur Datenaufnahme gemäß der Erfindung,
Fig. 4: Ein Ablaufdiagramm eines weiteren Verfahrens zur Datenaufnahme gemäß der Erfindung,

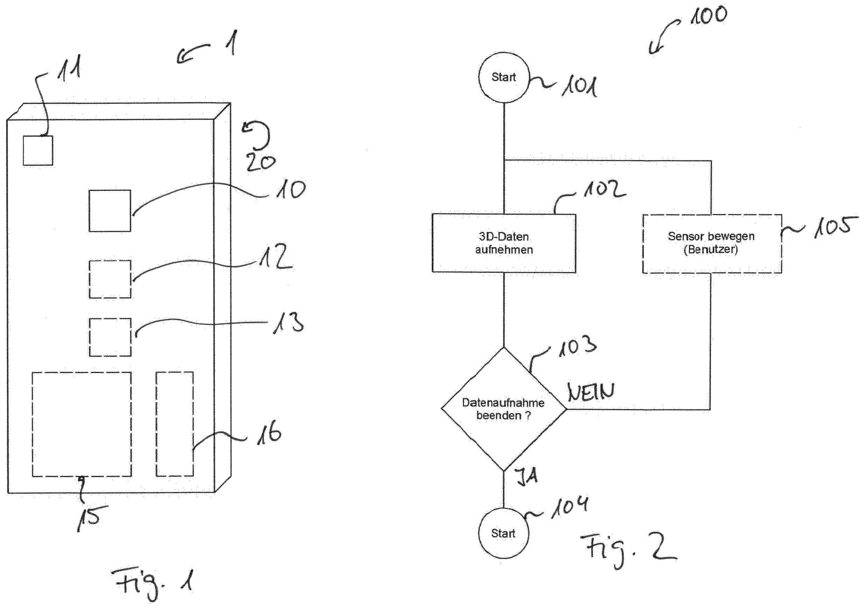

Figur 1 zeigt ein mobiles Datenverarbeitungsgerät 1 in Form eines Mobiltelefons. Das Datenverarbeitungsgerät 1 ist mit verschiedenen Sensoren ausgestattet, unter anderem mit einer Kamera 10, einem Lidar-Sensor 11, einem kombinierten Trägheits- und Lagesensor 12, sowie einem Positionssensor 13. Die Sensoren 10 und 11 sind optische Sensoren, die an einer Außenseite des Datenverarbeitungsgeräts 1 angeordnet sind. Die Sensoren 12, 13 sind im Inneren des Datenverarbeitungsgeräts 1 angeordnet und daher nur gestrichelt dargestellt.

Im Inneren des Datenverarbeitungsgeräts 1 sind weiterhin eine Prozessoreinheit 15 und eine Speichereinheit 16 angeordnet.

Auf einer in Figur 1 nicht sichtbaren Rückseite des Datenverarbeitungsgeräts 1 ist eine Benutzerschnittstelle 20 angeordnet. Hierbei kann es sich beispielsweise um ein berührungsempfindliches Anzeigegerät (Touchscreen) handeln, über welches ein Benutzer mit dem Datenverarbeitungsgerät 1 interagieren kann. Ebenso ist Sprachinteraktion vorstellbar.

Das Datenverarbeitungsgerät 1 enthält weiterhin eine große Zahl zusätzlicher Komponenten, die für das Verständnis der Erfindung hier nicht relevant sind und daher nicht dargestellt werden.

Die Kamera 10 und der Lidar-Sensor 11 sind eingerichtet, 3D-Tiefendaten der Umgebung des Datenverarbeitungsgeräts 1 zu erfassen. Anstelle des, oder zusätzlich zu, dem Lidar-Sensor 11 kann eine TOF (time-of-flight) Kamera vorgesehen sein, die zusätzlich zu Helligkeitswerten einzelner Bildpunkte auch eine Flugzeit von Lichtwellen zwischen der Kamera und den durch einzelne Bildpunkte abgebildeten Objekten zu bestimmen. Der Lidar-Sensor 11 und/oder die TOF Kamera ermitteln den Abstand zwischen dem Sensor und interessierenden Objekten durch Aussenden von Laserpulsen und Registrierung des zurückgestreuten Lichts. Die genaue Arbeitsweise solcher Sensoren ist dem Fachmann bekannt und wird daher hier nicht näher ausgeführt.

Die Sensoren 12 und 13 dienen dazu, die Position, Ausrichtung und Bewegung des Datenverarbeitungsgeräts 1 zu ermitteln, um die mittels der Sensoren 10, 11 aufgenommen 3D-Tiefendaten zueinander in Beziehung zu setzen. Der Lagesensor 12 kann eingerichtet sein, Beschleunigungswerte in drei Raumrichtungen zu bestimmen, um einerseits die Lage des Datenverarbeitungsgeräts 1 und andererseits dessen Bewegung zu registrieren. Der Sensor 12 kann beispielsweise ein GPS-Sensor sein, mittels dem eine absolute Position des Datenverarbeitungsgeräts 1 ermittelt werden kann. Der prinzipielle Aufbau solcher Sensoren ist dem Fachmann bekannt, und entsprechende Sensoren sind ohne Schwierigkeiten Verfügbar.

Die Sensoren 10, 11, 12, 13 sind mit der Prozessoreinheit 15 und der Speichereinheit 16 verbunden. Dabei können die Sensoren 10, 11, 12, 13 entweder direkt auf die Speichereinheit 16 zugreifen, beispielsweise über ein DMA (Direct Memory Access) Protokoll, oder Messwerte der Sensoren 10, 11, 12, 13 werden durch die Prozessoreinheit 15 ausgelesen und in der Speichereinheit 16 abgelegt. Entsprechende Protokolle sind dem Fachmann bekannt.

Die Prozessoreinheit 15 kann weiterhin auf in der Speichereinheit 16 abgelegte Daten der Sensoren 10, 11, 12, 13 zugreifen, um diese zu verarbeiten.

In Figur 2 ist der Ablauf eines Verfahrens 100 dargestellt, mit welchem 3D-Tiefendaten einer Szene aufgenommen werden, um daraus ein 3D-Modell der Szene zu bestimmen.

Dabei kann das in Figur 1 dargestellte Datenverarbeitungsgerät 1 als ein mobiler Sensor verwendet werden. Hierzu kann ein Computerprogramm in der Speichereinheit 16 abgelegt sein, welches durch die Prozessoreinheit 15 ausgeführt wird.

Das Computerprogramm wartet zunächst auf eine Startfreigabe des Benutzers, beispielsweise durch Berühren einer auf der Benutzerschnittstelle dargestellten Schaltfläche durch den Benutzer. Dies ist in Figur 2 durch das Element 101 "Start" dargestellt.

Nach der Startfreigabe veranlasst das Programm einen oder mehrere der Sensoren 10, 11, 12, 13, 3D-Tiefendaten aufzunehmen und in der Speichereinheit 16 abzulegen. Diese 3D-Tiefendaten können ein Kamerabild, mit zugehöriger Tiefenkarte umfassen, zusätzlich können Daten über Position, Lage, Ausrichtung und Bewegung des Datenverarbeitungsgeräts 1 in den 3D-Tiefendaten enthalten sein. Das Aufnehmen der Daten ist durch das Element 102 "3D Daten aufnehmen" dargestellt.

Das Programm prüft als nächstes in Element 103 "Datenaufnahme beenden?", ob der Benutzer die Beendigung der Datenaufnahme angezeigt hat, beispielsweise wiederum durch Berühren einer entsprechenden Schaltfläche auf der Benutzerschnittstelle. In diesem Fall wird die Datenaufnahme beendet, dies ist in Figur 2 durch das Element 104 "Ende" dargestellt.

Hat der Benutzer das Ende der Datenaufnahme nicht angezeigt, so wird der Ablauf mit der Aufnahme weiterer Daten in Element 102 fortgesetzt, so dass das Programm eine Schleife ausführt, bis der Benutzer das Ende der Datenaufnahme anzeigt.

Während des Ablaufs der Programmschleife wird der mobile Sensor durch den Benutzer durch die Szene bewegt. Dies ist in Figur 2 durch das Element 105 "Sensor bewegen" dargestellt. Das Element 105 ist dabei mit gestrichelten Linien dargestellt, da es sich nicht um einen durch das Programm definiert durchgeführten Schritt handelt.

Nach Beenden der Datenaufnahme können die aufgenommenen Daten genutzt werden, um ein 3D-Modell der aufgenommenen Szene zu ermitteln. Dieses 3D-Modell kann anschließend in VR- oder AR-Anwendungen genutzt werden, um die aufgenommene Szene und/oder computergenerierte Modifikationen davon zu visualisieren. Ebenso ist eine Visualisierung über Geräte wie Smartphones, Tablets oder PCs denkbar.

Allerdings erhält der Benutzer in dem in Figur 2 dargestellten Prozess keine Rückmeldung darüber, ob die bereits aufgenommenen Daten für die Ermittlung eines qualitativ hochwertigen 3D-Modells geeignet sind. Unter einem qualitativ hochwertigen 3D-Modell kann dabei beispielsweise ein 3D-Modell verstanden werden, welches eine genaue, beispielsweise fotorealistische Visualisierung der Szene ermöglicht und somit möglichst frei von Artefakten ist. Alternativ oder zusätzlich kann unter einem qualitativ hochwertigen 3D-Modell ein 3D-Modell verstanden werden, welches die geometrischen Abmessungen der Szene möglichst genau wiedergibt.

Der Benutzer kann somit erst nach vollständiger Ermittlung des 3D-Modells feststellen, ob dieses seinen Qualitätsansprüchen genügt. Je nach Rechenaufwand der verwendeten Methode zur Ermittlung des 3D-Modells kann es hier zu ärgerlichen Verzögerungen und zusätzlichem Aufwand und damit einhergehenden Frustration kommen, wenn die 3D-Tiefendaten neu aufgenommen oder ergänzt werden müssen.

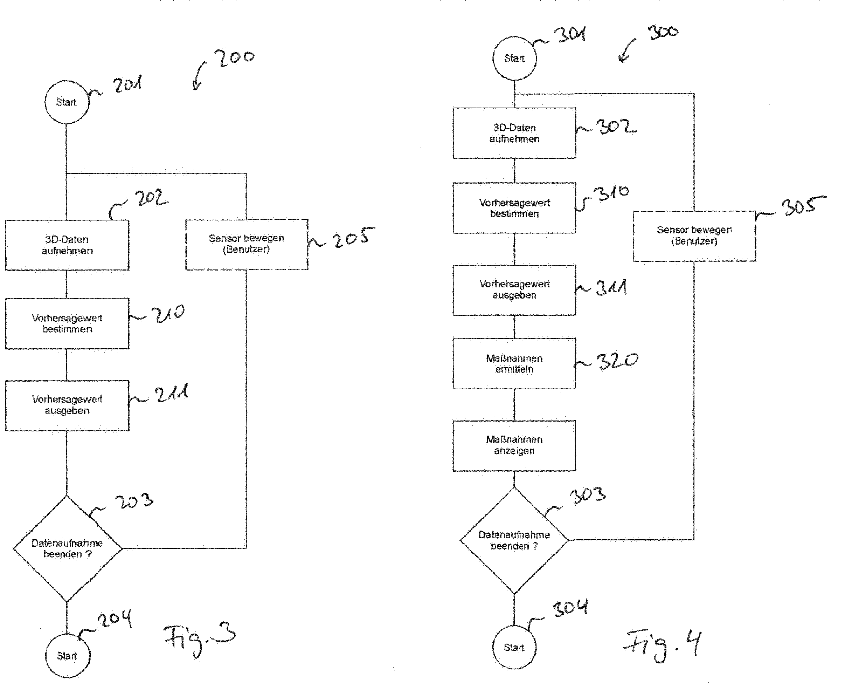

In Figur 3 ist ein Verfahren 200 zur Datenaufnahme dargestellt, welches hier Abhilfe schaffen soll. Sich entsprechende Schritte sind dabei mit einem jeweils um 100 erhöhten Bezugszeichen versehen. Anders als im Verfahren 100 wird im Verfahren 200 nach der Aufnahme der 3D-Tiefendaten in Schritt 202 in einem Schritt 210 aus den bereits aufgenommenen 3D-Tiefendaten zunächst ein Vorhersagewert für die Qualität des aus den 3D-Tiefendaten zu ermittelnden 3D-Modells bestimmt und in einem Schritt 211 über die Benutzerschnittstelle 20 dem Benutzer zur Verfügung gestellt. Dazu kann der Vorhersagewert beispielsweise in einer numerischen Anzeige, in einem Fortschrittsbalken, durch farbliche Notation und/oder einem ähnlichen grafischen Anzeigeelement ausgegeben werden. Ebenso ist hier eine auditive bzw. akustische Interaktion denkbar.

Danach wird das Verfahren 200 analog zu dem Verfahren 100 in Schritt 203 fortgesetzt.

Durch den Vorhersagewert für die Qualität des 3D-Modells erhält der Benutzer ein Feedback darüber, ob die bereits aufgenommenen 3D-Tiefendaten für die Ermittlung eines guten 3D-Modells ausreichen, oder ob zusätzliche Daten aufgenommen werden müssen. Der Benutzer kann somit die Datenaufnahme solange fortsetzen, bis er mit dem Vorhersagewert für die Qualität des 3D-Modells zufrieden ist. Eine nachträgliche Ergänzung oder Neuaufnahme der 3D-Tiefendaten wird somit im Regelfall nicht mehr erforderlich sein. Dem Nutzer können im Vorhinein außerdem Beispiele von Rekonstruktionen gezeigt werden, welche mit unterschiedlichen Datenqualitäten korrespondieren. Damit können Überraschungseffekte so gut wie möglich ausgeschlossen werden.

In Figur 4 ist ein weiteres Verfahren 300 dargestellt, wobei wiederum Schritte, die in den zuvor beschriebenen Verfahren ebenfalls enthalten sind, mit einem um weitere 100 erhöhten Bezugszeichen versehen sind.

In dem Verfahren 300 wird, anders als in dem zuvor beschriebenen Verfahren 200, in Schritt 320 wenigstens eine Maßnahme ermittelt, welche geeignet ist, die Qualität der aufgenommenen Daten zu erhöhen. Solche Maßnahmen können beispielsweise eine Reduzierung der Bewegungsgeschwindigkeit des mobilen Sensors und/oder eine Bewegung des mobilen Sensors zu weiteren Beobachtungspunkten und/oder eine Drehung des mobilen Sensors in weitere Blickrichtungen und/oder eine neuerliche Aufnahme von bereits aufgenommenen Regionen umfassen. Die ermittelten Maßnahmen werden dem Benutzer über die Benutzerschnittstelle 20 textuell und/oder grafisch angezeigt, so dass dieser diese bei der Bewegung des Sensors in Schritt 305 berücksichtigen kann. Im Übrigen entspricht der Ablauf des Verfahrens 300 dem des Verfahrens 200.

Die hier beschriebenen Verfahren ermöglicht es, den Benutzer bei der Datenaufnahme zu unterstützen oder anzuleiten, so dass dieser auch ohne Kenntnis von den Anforderungen an die Datenaufnahme 3D-Tiefendaten aufnehmen kann, die zur Ermittlung eines qualitativ hochwertigen 3D-Modells einer interessierenden Szene genutzt werden können.

Die Ermittlung des Vorhersagewerts für die Qualität des 3D-Modells sowie ggf. die Ermittlung geeigneter Maßnahmen zur Verbesserung der Datenqualität können mittels trainingsbasierter KI-Verfahren erfolgen. Dazu werden die bereits aufgenommenen 3D-Tiefendaten als Input in ein Neuronales Netz gespeist.

Die Struktur dieses neuronalen Netzes kann beispielsweise einer als "Pointnet" oder "Pointnet++" bekannten Struktur eines Multi-Layer Perceptron Netwerkes entsprechen, wie sie in den Artikeln "PointNet: Deep Learning on Point Sets for 3D Classification and Segmentation" bzw. "Pointnet++: Deep Hierarchical Feature Learning on Point Sets in a Metric Space", beide von von Qi et al., beschrieben sind.

Die bekannte Struktur des Netzes kann so angepasst werden, dass es als Ausgabewert einen skalaren, also dimensionslosen, Zahlenwert in einem definierten Wertebereich ausgibt. Dieser Wertebereich kann die reellen Zahlen zwischen 0 und 1 umfassen, andere mögliche Wertebereiche sind z.B. ganze Zahlen zwischen 0 und 255 (2⁸-1) oder zwischen 0 und 65535 (2¹⁶-1). Dazu können eine oder mehrere ausgangsseitige Lagen des Netzes modifiziert werden, oder es können zusätzliche Lagen wie Faltungslagen oder "Fully-connected"-Lagen angefügt werden. Um zusätzlich Maßnahmen zur Verbesserung der Datenqualität durch das Netz ermittelt werden sollen, kann das Netz so modifiziert werden, dass als Ergebnis ein mehrdimensionaler Vektor (z.B. eine vorgeschlagene Bewegung des mobilen Sensors) ausgegeben wird.

Gewichte für das neuronale Netz sind zusammen mit den Programminstruktionen zur Ausführung der Funktion des neuronalen Netzes durch die Prozessoreinheit 15 in der Speichereinheit 16 hinterlegt. Zur Gewinnung bzw. optimalen Anpassung dieser Gewichte ist das neuronale Netz mit Trainingsdaten trainiert worden. Mittels iterativer Verfahren wie beispielsweise Gradientenabstieg werden die diese Parameter so optimiert, dass das Netzwerk eine möglichst genaue Vorhersage auf Basis der Trainingsdaten ermöglicht.

Die Bereitstellung geeigneter und ausreichend großer Trainingsdaten ist ein Kernproblem bei der Programmierung bzw. dem Training von neuronalen Netzen. Für die hier beschriebenen Anwendungen müssen als Trainingsdaten einerseits Datensätze von 3D-Tiefendaten (Sensordaten beispielsweise eines LiDAR Sensors) und andererseits Qualitätsdaten von aus diesen 3D-Tiefendaten ermittelten 3D-Modellen enthalten.

Dazu kann ein mehrstufiger Prozess angewendet werden, welcher ganz oder wenigstens zu einem großen Teil automatisierbar ist, um in kurzer Zeit eine große Zahl von relevanten Trainingsdaten zu erhalten. Hierzu wird in einem ersten Schritt zu einer Anzahl von echten oder simulierten Szenen jeweils ein ideales 3D-Modell erstellt, also ein 3D-Modell, welches die Szene vollständig korrekt wiedergibt. Hierbei kann auch auf bestehende Datenbanken mit 3D-Modellen zurückgegriffen werden, die öffentlich verfügbar sind, z.B. unter www.shapenet.org.

Das entsprechende Modell wird jeweils als Referenzmodell bezeichnet. In einem zweiten Schritt werden, basierend auf dem Referenzmodell, 3D-Tiefendaten simuliert, welche Messwerte eines fiktiven Sensors repräsentieren, welcher durch die jeweilige Szene bewegt wird. Bei der Simulation der 3D-Tiefendaten können unterschiedliche Sensorkonfigurationen berücksichtigt werden.

Die so ermittelten Datensätze mit 3D-Tiefendaten werden anschließend optional in einem dritten Schritt degradiert, d.h. künstlich verschlechtert. Hierbei können verschiedene Effekte nachgebildet werden, welche bei einer realen Datenaufnahme zu unvollkommenen Daten führen können. Zu solchen Effekten gehören beispielsweise Sensorrauschen, Bewegungseffekte, nicht ausreichend angefahrene Aufnahmeorte bzw. -richtungen, und/oder Artefakte. Artefakte können z.B. Reflexionen an spiegelnden Oberflächen oder Lichtbrechung sein, durch welche LIDAR- oder TOF-Sensoren unzutreffende 3D-Tiefendaten ermitteln können.

Anstelle einer nachträglichen Degradierung perfekt simulierter 3D-Tiefendaten können entsprechende Effekte auch direkt bei der Simulation der 3D-Tiefendaten berücksichtigt werden.

Aus den so degradierten 3D-Tiefendaten werden in einem vierten Schritt wiederum mit an sich bekannten Methoden 3D-Modelle erstellt, welche als Vergleichsmodelle bezeichnet werden. Diese weisen gegenüber den Referenzmodellen aufgrund der degradierten Ausgangsdaten eine geringere Qualität auf.

In einem fünften Schritt wird den Vergleichsmodellen durch einen Vergleich mit dem jeweiligen Referenzmodell ein skalarer Qualitätsfaktor zugeordnet, der auch als Qualitätsmetrik bezeichnet werden kann. Für entsprechende referenzbasierte Qualitätsmetriken, also Qualitätsmetriken die durch Vergleich mit einem Referenzmodell festgelegt werden, stehen neben einer manuellen Annotation, die sehr genau, aber auch sehr aufwendig ist, bekannte automatisierte Verfahren zur Verfügung. Hierzu gehören beispielsweise auf dem Prinzip der "Intersection over Union" basierende Verfahren wie der "Jaccard Index" oder der "Tanimoto Index", oder statistische Verfahren wie der "F-Score", auch bekannt als der "Sørensen-Dice coefficient". Andere mögliche Verfahren sind der "Matthews correlation coefficient" oder "Cohen's kappa".

Die jeweiligen degradierten Datensätze von 3D-Tiefendaten und die dazu ermittelten Qualitätsmetriken ergeben Datenpaare, mit denen das neuronale Netz zur Bestimmung des Vorhersagewerts trainiert werden kann. Der Vorhersagewert stellt somit eine referenzlose Qualitätsmetrik dar, da für seine Bestimmung nach Trainieren des Netzes keine Kenntnis von dem Referenzmodell mehr erforderlich ist.

Zusätzlich zu dem Trainieren des neuronalen Netzes zur Vorhersage der Qualität des 3D-Modells kann das Wissen von der Art der künstlich angewendeten Datendegradation genutzt werden, um das neuronale Netz zur Identifikation möglicher Gegenmaßnahmen zu trainieren.

Die im Rahmen der oben beschriebenen Trainingsmethode erzeugten degradierten 3D-Tiefendaten können zusätzlich verwendet werden, um die zur eigentlichen 3D-Rekonstruktion, also zur Bestimmung von 3D-Modellen aus den Tiefendaten, verwendeten Verfahren weiter zu verbessern, um diese beispielsweise unempfindlicher gegen die simulierten Datenmängel zu machen.

Die mit den beschriebenen Trainingsmethoden ermittelten Gewichte für das neuronale Netz können zusammen mit den Programminstruktionen für die Ausführung eines der beschriebenen Datenaufnahmeverfahren als zusammenhängendes Computerprogramm auf einem oder mehreren Datenträgern, oder zum Download über das Internet, zur Verfügung gestellt werden, so dass ein potentieller Anwender des Verfahrens dieses auf einem mobilen Datenverarbeitungsgerät, beispielsweise auf einem Mobiltelefon, installieren kann. Das Computerprogrammprodukt kann weitere Komponenten enthalten, beispielsweise Programminstruktionen für die Rekonstruktion von 3D-Modellen aus den aufgenommenen 3D-Tiefendaten, ggf. in Kombination mit weiteren Gewichten hierzu verwendeter neuronaler Netze, und/oder der Visualisierung solcher 3D-Modelle.

Zur Rekonstruktion von 3D-Modellen aus den aufgenommenen 3D-Tiefendaten stehen verschiedene bekannte Verfahren zur Verfügung, auf die hier aus Gründen der Übersichtlichkeit nicht im Detail eingegangen werden soll. Beispielsweise beschreibt der Artikel "Robust Reconstruction of Indoor Scenes" von Choi et al.ein deterministischmathematisches Verfahren, während der Artikel "Occupancy Networks: Learning 3D Reconstruction in Function Space" von Mescheder et al. ein lernbasiertes Verfahren beschreibt. Auf lernbasierte Verfahren und deren Weiterentwicklungen wird auch in der Patentanmeldung EP20190957.9 der Anmelderin näher eingegangen.

Das Computerprogrammprodukt kann auf bestimmte Datenverarbeitungsgeräte zugeschnitten sein. Weisen beispielsweise unterschiedliche Datenverarbeitungsgeräte, z.B. Mobiltelefone unterschiedlicher Hersteller, unterschiedliche Kombinationen von Sensoren auf, so kann das Trainieren der verwendeten neuronalen Netze gerätespezifisch erfolgen. Hierzu muss lediglich die Simulation der 3D-Tiefendaten unter Berücksichtigung der jeweiligen Sensorkonfiguration des Endgeräts erfolgen, so dass am Ende für jeden Gerätetyp oder für jede Gerätefamilie ein individueller Satz von Gewichten für die neuronalen Netze ermittelt wird. Die Programminstruktionen können dabei für alle Gerätetypen ähnlich oder gar identisch sein.

Das Computerprogrammprodukt kann weiter Programminstruktionen beinhalten, mit denen von Nutzern aufgenommene 3D-Tiefendaten an einen Anbieter des Computerprogrammprodukts oder an Dritte übermittelt werden. Diese können die 3D-Tiefendaten und daraus erstellte 3D-Modelle als weitere Trainingsdaten für die beschriebenen neuronalen Netze zu nutzen, um die Vorhersage- bzw. Rekonstruktionsgenauigkeit dieser Netze zu verbessern.

## Patentansprüche

1. Computerassistiertes Verfahren zur Aufnahme von 3D-Tiefendaten einer Szene, bei welchem ein mobiler Sensor zur Aufnahme von 3D-Tiefendaten durch die Szene bewegt wird und 3D-Tiefendaten der Szene mittels des mobilen Sensors aufgenommen werden, **dadurch gekennzeichnet, dass** während der Bewegung des mobilen Sensors durch die Szene wiederholt aus den aufgenommenen 3D-Tiefendaten ein Vorhersagewert für die erwartete Qualität eines aus den aufgenommenen 3D-Tiefendaten zu ermittelnden 3D-Modells der Szene ermittelt und einem Nutzer zur Verfügung gestellt wird.

2. Verfahren nach Anspruch 1, **dadurch gekennzeichnet, dass** der Vorhersagewert einen Grad der Übereinstimmung eines aus den aufgenommenen 3D-Tiefendaten zu ermittelnden 3D-Modells der Szene mit einem idealen 3D-Modell der Szene repräsentiert.

3. Verfahren nach Anspruch 1 oder 2, **dadurch gekennzeichnet, dass** der Vorhersagewert ein skalarer Wert mit einem beidseitig begrenzten Wertebereich ist, wobei ein erster Grenzwert des Wertebereichs eine perfekte Übereinstimmung anzeigt, und wobei ein zweiter Grenzwert des Wertebereichs eine nicht vorhandene Übereinstimmung anzeigt.

4. Verfahren nach einem der Ansprüche 1 bis 3, **dadurch gekennzeichnet, dass** die Ermittlung des Vorhersagewerts mittels eines lernbasierten KI-Systems erfolgt.

5. Verfahren nach einem der vorangehenden Ansprüche, **dadurch gekennzeichnet, dass** zusätzlich zu dem Vorhersagewert wenigstens eine geeignete Maßnahme ermittelt wird, um die erwartete Qualität des zu ermittelnden 3D-Modells zu verbessern, und ein Hinweis auf diese Maßnahme dem Nutzer zur Verfügung gestellt wird.

6. Verfahren nach Anspruch 5, **dadurch gekennzeichnet, dass** die wenigstens eine geeignete Maßnahme eine Veränderung der Geschwindigkeit beinhaltet, mit welcher der mobile Sensor durch die Szene bewegt wird.

7. Verfahren nach Anspruch 5 oder 6, **dadurch gekennzeichnet, dass** die wenigstens eine geeignete Maßnahme eine Bewegung des mobilen Sensors zu zusätzlichen Aufnahmepositionen und/oder in zusätzliche Aufnahmerichtungen beinhaltet.

8. Mobiles Datenverarbeitungsgerät, umfassend: wenigstens einen Sensor zur Aufnahme von 3D-Tiefendaten, eine Prozessoreinheit, eine Speichereinheit, sowie eine Benutzerschnittstelle, **dadurch gekennzeichnet, dass** das Datenverarbeitungsgerät eingerichtet ist, ein Verfahren nach einem der vorangehenden Ansprüche auszuführen.

9. Datenverarbeitungsgerät nach Anspruch 8, **dadurch gekennzeichnet, dass** das Datenverarbeitungsgerät Positions-, Trägheits-, und/oder Lagesensoren umfasst.

10. Datenverarbeitungsgerät nach Anspruch 8 oder 9, **dadurch gekennzeichnet, dass** Datenverarbeitungsgerät ein Mobiltelefon oder Tablet ist.

11. Computerprogrammprodukt mit Programminstruktionen die geeignet sind, bei Ausführung durch eine Prozessoreinheit eines mobilen Datenverarbeitungsgeräts nach einem der Ansprüche 8 bis 10 dieses zu veranlassen, ein Verfahren nach einem der Ansprüche 1 bis 7 durchzuführen.

12. Computerprogrammprodukt nach Anspruch 11, **dadurch gekennzeichnet, dass** es zusätzlich zu den Programminstruktionen durch Trainingsverfahren ermittelte Funktionsparameter des KI-Systems umfasst.
